# EUROPEAN PATENT APPLICATION

(11) **EP 4 086 997 A1**
(43) Date of publication of application: **09.11.2022**
(21) Application number: 21822578.7
(22) Date of filing: 08.06.2021
(51) Int. Cl.: H01M 10/04, H01M 50/531

(54) **METHOD FOR MANUFACTURING ELECTRODE INCLUDING FOLDING PART AND ELECTRODE SHEET INCLUDING FOLDING PART**

(30) Priority: 08.06.2020 KR 20200069118
(71) Applicant: LG Energy Solution, Ltd., Seoul 07335 (KR)
(72) Inventor: WON, Kwang Ho, Daejeon 34122 (KR); KIM, Young Hoon, Daejeon 34122 (KR); KIM, Ki Tae, Daejeon 34122 (KR); PARK, Chan Ki, Daejeon 34122 (KR); OH, Jung Shik, Daejeon 34122 (KR); KIM, Hyun Tae, Daejeon 34122 (KR)
(74) Representative: Plasseraud IP
(86) International application number: PCT/KR2021/007130
(87) International publication number: WO 2021/251719

(57) **Abstract**

The present invention relates to an electrode manufacturing method for manufacturing a foldable battery cell, the electrode manufacturing method including a coating step of forming an electrode mixture coated portion on an electrode sheet so as to include an uncoated portion having no electrode mixture formed thereon by coating, a step of slitting the electrode sheet into a plurality of unit electrode sheets, and a step of notching the slit electrode sheet, wherein the uncoated portion includes a first uncoated portion formed so as to be parallel to a direction in which the electrode sheet is taken out and a second uncoated portion formed so as to be perpendicular to the direction in which the electrode sheet is taken out.

## Description

### [Technical Field]

This application claims the benefit of priority to Korean Patent Application No. 2020-0069118 filed on June 8, 2020, the disclosure of which is incorporated herein by reference in its entirety.

The present invention relates to a method of manufacturing an electrode including a folding portion and an electrode sheet including the folding portion, and more particularly to a method of manufacturing an electrode including a folding portion usable to manufacture a foldable battery cell and an electrode sheet including the folding portion.

### [Background Art]

A lithium secondary battery, which is capable of being charged and discharged, has been widely used as an energy source for wireless mobile devices or wearable devices, and has also been used as an energy source for electric vehicles and hybrid electric vehicles presented as alternatives to existing gasoline and diesel vehicles, which cause air pollution.

In addition, with an increase in kinds of miniaturized multifunctional products and a trend of emphasizing design in electronic devices, the number of products based on new shapes, such as a shape including a curve or a geometrical shape, other than conventional simple structures, such as a planar structure and a prismatic structure, has increased.

Lithium secondary batteries having various shapes, such as a stepped shape and a polygonal shape, other than a rectangular shape, have been developed in order to apply the lithium secondary batteries to such products having various shapes.

For example, for a smartphone, the side thereof is curved in order to improve sensation of grip, and flexible display products capable of being bent or folded have come on the stage.

In the case in which a rectangular battery cell is used in a bendable or foldable device, there is a problem in that dead space is formed in large numbers. Therefore, it is necessary to develop a battery cell capable of securing capacity while reducing dead space even though the battery cell is mounted in a device having an atypical shape.

In connection therewith, Patent Document 1 discloses a secondary battery configured such that a positive electrode active material layer and a negative electrode active material layer are formed by coating so as to be spaced apart from each other by a predetermined distance and including a bending region configured to be bent at an uncoated portion, which is not coated with the positive electrode active material layer and the negative electrode active material layer.

However, the secondary battery disclosed in Patent Document 1 is suitably applied to a long device but has a problem in that a plurality of bending regions is formed, whereby the uncoated portion is widened, and therefore energy density is lowered.

Patent Document 2 relates to a battery cell including a current collector having at least one uncoated portion that partitions an electrode mixture, wherein the portion of a battery case at which the uncoated portion is located is bent, whereby the shape of the battery cell is changed.

In Patent Document 2, an electrode assembly is separated from the battery case, whereby there is a problem in that a bent portion of the battery case and a bent portion of the electrode assembly may be misaligned with each other when the battery cell is bent.

Patent Document 3 discloses an electrode configured to have a structure in which an electrode active material is printed on a band type electrode current collector so as to have a pattern repeated at regular intervals.

However, the invention disclosed in Patent Document 3 relates to an electrode cut so as to have a predetermined length and width, wherein the electrode is received in a sheathing member in a state of being bent.

As can be seen from the above description, each of the above patent documents discloses only an electrode including an uncoated portion that is coated with no electrode mixture. Therefore, a method of manufacturing an electrode having the above structure or research on the shape of an electrode sheet is needed.

### (Prior Art Documents)

(Patent Document 1) Korean Patent Application Publication No. 2012-0022385 (2012.03.12)
(Patent Document 2) Korean Patent Application Publication No. 2017-0033513 (2017.03.27)
(Patent Document 3) Japanese Patent Application Publication No. 1995-153438 (1995.06.16)

### [Disclosure]

### [Technical Problem]

The present invention has been made in view of the above problems, and it is an object of the present invention to provide a method of manufacturing an electrode including a folding portion constituted by an uncoated portion having no electrode mixture formed thereon by coating in order to manufacture an electrode for foldable battery cells and an electrode sheet including the folding portion.

### [Technical Solution]

An electrode manufacturing method according to the present invention to accomplish the above object includes a coating step of forming an electrode mixture coated portion on an electrode sheet so as to include an uncoated portion having no electrode mixture formed thereon by coating, a step of slitting the electrode sheet into a plurality of unit electrode sheets, and a step of notching the slit electrode sheet, wherein the uncoated portion includes a first uncoated portion formed so as to be parallel to a direction in which the electrode sheet is taken out and a second uncoated portion formed so as to be perpendicular to the direction in which the electrode sheet is taken out.

In the electrode manufacturing method according to the present invention, the slitting step may be a step of slitting the coated portion between the first uncoated portion and another first uncoated portion adjacent to the first uncoated portion.

In the electrode manufacturing method according to the present invention, the second uncoated portion may be a folding portion, and the notching step may be a step of cutting a coated portion located between the second uncoated portion and another second uncoated portion adjacent to the second uncoated portion to manufacture a unit electrode.

In the electrode manufacturing method according to the present invention, the second uncoated portion may include a notching portion and a folding portion, the notching portion and the folding portion may be alternately disposed, and a unit electrode may be manufactured by notching the notching portion.

In addition, the electrode manufacturing method may include a step of forming the uncoated portion such that the width of the notching portion and the width of the folding portion are different from each other.

In the electrode manufacturing method according to the present invention, the notching step may include a notching process for forming an electrode tab on the first uncoated portion and a coated portion notching process for manufacturing the unit electrode.

In addition, the notching process for forming the electrode tab and the coated portion notching process may be simultaneously performed.

In the electrode manufacturing method according to the present invention, the notching step may include a notching process for forming an electrode tab on the first uncoated portion and a coated portion notching process for manufacturing the unit electrode.

In the electrode manufacturing method according to the present invention, the notching process for forming the electrode tab and the coated portion notching process may be simultaneously performed.

An electrode sheet according to the present invention includes a coated portion having an electrode mixture coated thereon and an uncoated portion having no electrode mixture formed thereon by coating, wherein the uncoated portion includes a first uncoated portion formed so as to be parallel to a direction in which the electrode sheet is taken out and a second uncoated portion formed so as to be perpendicular to the direction in which the electrode sheet is taken out, the first uncoated portion is an electrode tab formation portion, and the second uncoated portion includes a notching portion and a folding portion.

In the electrode sheet according to the present invention, the notching portion and the folding portion may be alternately arranged.

An electrode tab may be formed at a boundary portion between any one of a first coated portion and a second coated portion formed on opposite sides of the folding portion and the portion at which the electrode tab is to be formed.

In the electrode sheet according to the present invention, the first coated portion and the second coated portion are formed so as to have the same size.

In the electrode sheet according to the present invention, the width of the folding portion may be formed so as to be greater than the width of the notching portion.

In the electrode sheet according to the present invention, the width of the folding portion may be greater than the thickness of the coated portion x π.

### [Advantageous Effects]

As is apparent from the above description, in an electrode manufacturing method according to the present invention, in order to form not only an uncoated portion, which is an electrode tab formation portion, but also an uncoated portion, which is configured to manufacture a folded electrode, on an electrode sheet, a method of coating a portion of the electrode sheet with an electrode mixture is used, whereby it is possible to reduce the number of manufacturing steps as compared to a method of coating the entirety of the electrode sheet with the electrode mixture and then removing the coating and to reduce defects that may occur during a coating removal process.

Also, in a notching process for manufacturing a unit electrode, notching is performed such that a folding portion is included in the unit electrode, whereby it is possible to obtain a unit electrode having a coated portion and an uncoated portion formed so as to have regular areas.

In addition, when notching is performed such that the folding portion is included in the unit electrode, an electrode tab is formed at every other coated portion formed on opposite sides of the portion at which the electrode tab is to be formed in a direction in which the electrode sheet is taken out. When unit electrodes are stacked, therefore, electrode tabs may overlap in the direction in which the unit electrodes are stacked.

### [Description of Drawings]

FIG. 1 is a plan view of an electrode sheet according to an embodiment.
FIG. 2 is a plan view showing a notching portion formed in the electrode sheet of FIG. 1.
FIG. 3 is a plan view of an electrode sheet according to another embodiment.
FIG. 4 is a vertical sectional view of the electrode sheet of FIG. 3.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Embodiments of the present invention will be described in detail with reference to the accompanying drawings.

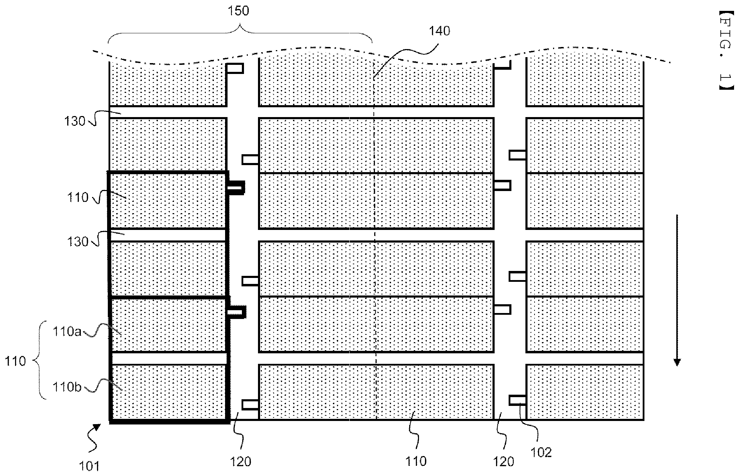

FIG. 1 is a plan view of an electrode sheet according to an embodiment.

An electrode manufacturing method according to the present invention includes a coating step of forming an electrode mixture coated portion on an electrode sheet so as to include an uncoated portion having no electrode mixture formed thereon by coating, a step of slitting the electrode sheet into a plurality of unit electrode sheets, and a step of notching the slit electrode sheet.

Referring to FIG. 1, an electrode mixture coated portion 110 is formed at the electrode sheet while the electrode sheet is taken out in an arrow direction. At this time, the coated portion 110 is formed such that an uncoated portion having no electrode mixture formed thereon by coating is formed, wherein a first uncoated portion 120 is formed so as to be parallel to a direction in which the electrode sheet is taken out, and a second uncoated portion 130 is formed so as to be perpendicular to the direction in which the electrode sheet is taken out.

The coated portion may be formed at any one of the upper surface and the lower surface of the electrode sheet or may be formed at opposite surfaces of the electrode sheet.

The first uncoated portion 120 is an electrode tab formation portion, and an electrode tab 102 of an unit electrode 101 is formed at the first uncoated portion 120.

The second uncoated portion 130 is a folding portion, which is a portion at which an electrode is folded, and the unit electrode 101 is notched so as to include the second uncoated portion 130.

That is, a first coated portion 110a and a second coated portion 110b are formed on opposite sides of the second uncoated portion 130, an electrode tab is formed at any one of the first coated portion 110a and the second coated portion 110b, and the first coated portion 110a and the second coated portion 110b have the same size.

The electrode sheet is slit into a plurality of unit electrode sheets 150, and a slitting line 140 is formed on a coating layer. Consequently, two unit electrode sheets 150 are formed from the electrode sheet of FIG. 1.

However, the coated portion and the uncoated portion may be formed such that two or more slitting lines are formed depending on the width of the electrode sheet and the size of the unit electrode, and the slitting line may be formed so as to divide the coated portion into two equal parts.

That is, the slitting step may be performed using a method of slitting a coated portion 110 located between a first uncoated portion 120 and another first uncoated portion 120 adjacent to the first uncoated portion 120.

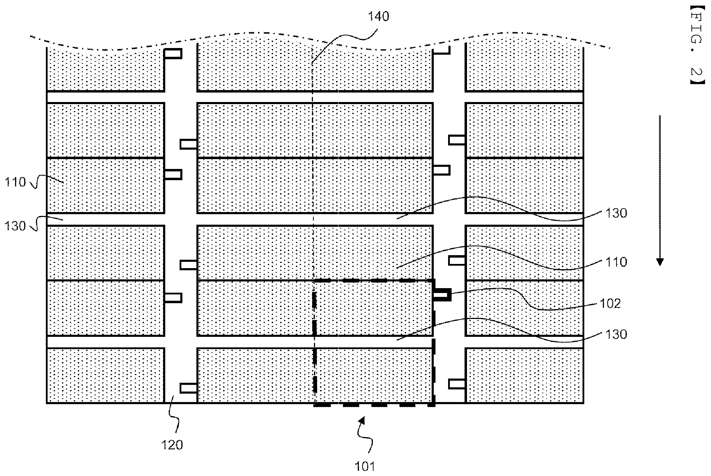

FIG. 2 is a plan view showing a notching portion formed in the electrode sheet of FIG. 1.

Referring to FIG. 2, the notching step is a process of punching the electrode sheet along outer peripheries of an electrode tab and a unit electrode, wherein, in order to form a unit electrode 101 indicated by a thick dotted line, an electrode tab 102 and a coated portion 110 located between a second uncoated portion 130 and another second uncoated portion 130 adjacent to the second uncoated portion 130 are cut to manufacture the unit electrode.

The notching step includes a notching process for forming an electrode tab 102 on the first uncoated portion 120 and a coated portion notching process for manufacturing a unit electrode, and the notching process for forming the electrode tab and the coated portion notching process may be sequentially performed.

Alternatively, the notching process for forming the electrode tab and the coated portion notching process may be simultaneously performed. In the case in which the notching process for forming the electrode tab and the coated portion notching process are simultaneously performed, it is possible to reduce an electrode manufacturing time.

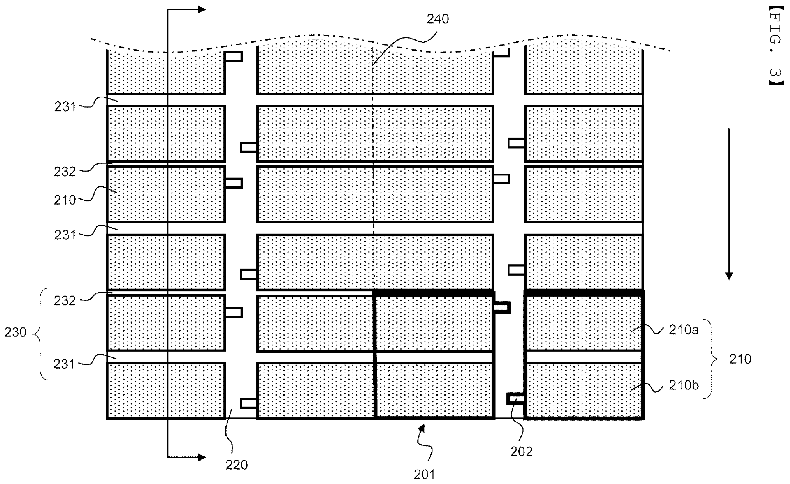

FIG. 3 is a plan view of an electrode sheet according to another embodiment.

Referring to FIG. 3, a coated portion 210 is formed at the electrode sheet while the electrode sheet is taken out in an arrow direction. At this time, the coated portion 210 is formed such that an uncoated portion having no electrode mixture formed thereon by coating is formed, wherein a first uncoated portion 220 is formed so as to be parallel to a direction in which the electrode sheet is taken out, and a second uncoated portion 230 is formed so as to be perpendicular to the direction in which the electrode sheet is taken out.

The first uncoated portion 220 is an electrode tab formation portion, and an electrode tab 202 of a unit electrode 201 indicated by a thick solid line is formed at the first uncoated portion 220.

The second uncoated portion 230 comprises a folding portion 231, which is a portion at which an electrode is folded, and a notching portion 232.

In the present invention, a unit electrode is formed so as to include the folding portion 231. The folding portion 231 and the notching portion 232 are alternately arranged in the direction in which the electrode sheet is taken out, except the coated portion.

A first coated portion 210a and a second coated portion 210b are formed on opposite sides of the folding portion 231 of the second uncoated portion 230, an electrode tab is formed at any one of the first coated portion 210a and the second coated portion 210b, and the first coated portion 210a and the second coated portion 210b have the same size.

In the electrode sheet of FIG. 3, the notching portion 232 is formed as an uncoated portion, unlike the electrode sheet of FIGS. 1 and 2. In the case in which the notching portion 232 is widened, the coated portion is narrowed, whereby the capacity of a battery cell may be reduced. In the case in which the notching portion 232 is punched to manufacture an unit electrode, however, it is possible to prevent occurrence of a problem in that an electrode mixture layer is separated from the coated portion or the coated portion is contaminated due to powder generated from the electrode mixture layer in the case in which the coated portion is punched.

A step of notching the electrode sheet of FIG. 3 includes a notching process for forming an electrode tab 202 on a first uncoated portion 220 and a notching portion 232 notching process for manufacturing a unit electrode 201. The notching process for forming the electrode tab and the notching portion notching process may be sequentially performed.

Alternatively, the notching process for forming the electrode tab and the notching portion notching process may be simultaneously performed. In the case in which the notching process for forming the electrode tab and the notching portion notching process are simultaneously performed, it is possible to reduce an electrode manufacturing time.

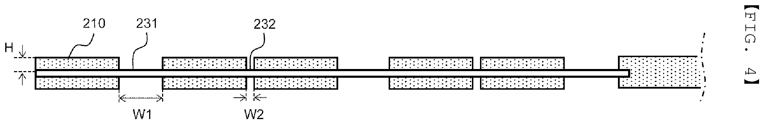

FIG. 4 is a vertical sectional view of the electrode sheet of FIG. 3.

Referring to FIG. 4, on the assumption that the direction in which the electrode sheet is taken out is a width W2 direction of the notching portion 232 and a width W1 direction of the folding portion 231, the width W2 of the notching portion 232 and the width W1 of the folding portion 231 may be formed so as to be different from each other. For example, the width W2 of the notching portion 232 may be formed so as to be less than the width W1 of the folding portion 231.

The folding portion 231 is disposed so as to face each other in the state in which the electrode is folded. It is preferable for the width W1 of the folding portion 231 to be at least 1/2 of the circumference of a circle having the thickness H of the coated portion as a radius. Consequently, the width W1 of the folding portion 231 may be formed so as to be greater than the thickness H of the coated portion x π.

Those skilled in the art to which the present invention pertains will appreciate that various applications and modifications are possible within the category of the present invention based on the above description.

### (Description of Reference Symbols)

101, 201: Unit electrodes
102, 202: Electrode tabs
110, 210: Coated portions
110a, 210a: First coated portions
110b, 210b: Second coated portions
120, 220: First uncoated portions
130, 230: Second uncoated portions
140, 240: Slitting lines
150: Unit electrode sheet
231: Folding portion
232: Notching portion
H: Thickness of coated portion
W1: Width of folding portion
W2: Width of notching portion

### [Industrial Applicability]

As is apparent from the above description, an electrode manufacturing method according to the present invention, in order to form not only an uncoated portion, which is an electrode tab formation portion, but also an uncoated portion, which is configured to manufacture a folded electrode, on an electrode sheet, a method of coating a portion of the electrode sheet with an electrode mixture is used, whereby it is possible to reduce the number of manufacturing steps as compared to a method of coating the entirety of the electrode sheet with the electrode mixture and then removing the coating and to reduce defects that may occur during a coating removal process.

Also, in a notching process for manufacturing a unit electrode, notching is performed such that a folding portion is included in the unit electrode, whereby it is possible to obtain a unit electrode having a coated portion and an uncoated portion formed so as to have regular areas.

In addition, when notching is performed such that the folding portion is included in the unit electrode, an electrode tab is formed at every other coated portion formed on opposite sides of the portion at which the electrode tab is to be formed in a direction in which the electrode sheet is taken out. When unit electrodes are stacked, therefore, electrode tabs may overlap in the direction in which the unit electrodes are stacked.

## Claims

1. An electrode manufacturing method comprising:
a coating step of forming an electrode mixture coated portion on an electrode sheet so as to include an uncoated portion having no electrode mixture formed thereon by coating;
a step of slitting the electrode sheet into a plurality of unit electrode sheets; and
a step of notching the slit electrode sheet,
wherein the uncoated portion comprises:
a first uncoated portion formed so as to be parallel to a direction in which the electrode sheet is taken out; and
a second uncoated portion formed so as to be perpendicular to the direction in which the electrode sheet is taken out.

2. The electrode manufacturing method according to claim 1, wherein the slitting step is a step of slitting the coated portion between the first uncoated portion and another first uncoated portion adjacent to the first uncoated portion.

3. The electrode manufacturing method according to claim 1, wherein
the second uncoated portion is a folding portion, and
during the notching step, a coated portion located between the second uncoated portion and another second uncoated portion adjacent to the second uncoated portion is cut to manufacture a unit electrode.

4. The electrode manufacturing method according to claim 1, wherein
the second uncoated portion comprises a notching portion and a folding portion,
the notching portion and the folding portion are alternately disposed, and
a unit electrode is manufactured by notching the notching portion.

5. The electrode manufacturing method according to claim 4, comprising a step of forming the uncoated portion such that a width of the notching portion and a width of the folding portion are different from each other.

6. The electrode manufacturing method according to claim 3, wherein the notching step comprises:
a notching process for forming an electrode tab on the first uncoated portion; and
a coated portion notching process for manufacturing the unit electrode.

7. The electrode manufacturing method according to claim 6, wherein the notching process for forming the electrode tab and the coated portion notching process are simultaneously performed.

8. The electrode manufacturing method according to claim 4, wherein the notching step comprises:
a notching process for forming an electrode tab on the first uncoated portion; and
a coated portion notching process for manufacturing the unit electrode.

9. The electrode manufacturing method according to claim 8, wherein the notching process for forming the electrode tab and the coated portion notching process are simultaneously performed.

10. An electrode sheet comprising:
a coated portion having an electrode mixture coated thereon; and
an uncoated portion having no electrode mixture formed thereon by coating,
wherein the uncoated portion comprises:
a first uncoated portion formed so as to be parallel to a direction in which the electrode sheet is taken out; and
a second uncoated portion formed so as to be perpendicular to the direction in which the electrode sheet is taken out,
the first uncoated portion is an electrode tab formation portion, and
the second uncoated portion comprises a notching portion and a folding portion.

11. The electrode sheet according to claim 10, wherein the notching portion and the folding portion are alternately arranged.

12. The electrode sheet according to claim 10, wherein an electrode tab is formed at a boundary portion between any one of a first coated portion and a second coated portion formed on opposite sides of the folding portion and the portion at which the electrode tab is to be formed.

13. The electrode sheet according to claim 12, wherein the first coated portion and the second coated portion are formed so as to have an identical size.

14. The electrode sheet according to claim 10, wherein a width of the folding portion is formed so as to be greater than a width of the notching portion.

15. The electrode sheet according to claim 10, wherein a width of the folding portion is greater than a thickness of the coated portion x π.
